# EUROPÄISCHE PATENTSCHRIFT

(11) **EP 1 139 464 B1**
(45) Veröffentlichungstag und Bekanntmachung des Hinweises auf die Patenterteilung: **08.08.2007**
(21) Anmeldenummer: 01103178.8
(22) Anmeldetag: 10.02.2001
(51) Int. Cl.: H01M 2/30, H01M 2/26

(54) **Alkalischer Akkumulator**
Alcaline accumulator
Accumulateur alcalin

(30) Priorität: 29.03.2000 DE 10015711
(43) Veröffentlichungstag der Anmeldung: 04.10.2001
(73) Patentinhaber: VARTA Automotive Systems GmbH, 30419 Hannover (DE)
(72) Erfinder: Bechtold, Dieter, 61118 Bad Vilbel (DE)
(74) Vertreter: Lins, Edgar

(56) Entgegenhaltungen:
- DE-C- 824 355
- FR-A- 2 771 218
- US-A- 3 960 603
- PATENT ABSTRACTS OF JAPAN vol. 009, no. 201 (E-336), 17. August 1985 (1985-08-17) & JP 60 065452 A (SANYO DENKI KK), 15. April 1985 (1985-04-15)
- PATENT ABSTRACTS OF JAPAN vol. 018, no. 204 (C-1189), 11. April 1994 (1994-04-11) & JP 06 007058 A (DAIWA SEIKO INC), 18. Januar 1994 (1994-01-18)

## Beschreibung

Gegenstand der Erfindung ist ein alkalischer Akkumulator mit in einem Gehäuse angeordnetem Wickelelektrodensatz, bei dem die Ränder der Elektroden mit Ableiterplatten durch Laserschweißen verbunden sind.

Bei alkalischen Akkumulatoren werden in vielen Fällen Wickelelektrodensätze verwendet. Die Elektrodenwickel sind so gestaltet, dass auf einer Seite die positive Elektrode, beispielsweise eine Nickelhydroxidelektrode, und auf der anderen Seite die negative Elektrode, beispielsweise eine NiMeH-Elektrode, mit ihrem Rand hervorsteht. An diese Ränder werden zur Stromableitung Ableiter- oder KontaktPlatten angebracht. Derartige Akkumulatoren sind beispielsweise der DE 3019186 C2 zu entnehmen, bei der eine Polarableiterplatte vorgesehen ist, die mehrere radial verlaufende Durchbrüche besitzt, deren Stanzgrade in den Elektrodenrand eingreifen und durch die Stromableitung zwischen äußerem Ableiter und Elektrode gebildet wird.

In der DE 824 355 C ist ein galvanisches Primär- oder Sekundärelement mit einem Wickelelektrodensatz beschrieben. Die Wickelelektroden werden an den Elektrodenenden im Innenradius mittels Klemmverbindung kontaktiert.

Aus der FR 2 771 218 A1 ist ein gewickelter Akkumulator bekannt, bei dem die Anschlussenden der Elektrodenplatten mit einer Anschlussscheibe durch Laserschweißen verbunden werden. Die Scheiben haben radiale Zonen, in denen die Laserschweißverbindung mit Elektroden hergestellt wird. Weiterhin sind Perforationen zwischen den Zonen vorgesehen, die einen Elektrolytdurchlass erlauben.

Aus der DE 2516530 und dem korrespondierenden US-Patent 3,960,603 ist ein Akkumulator mit Wickelelektroden zu entnehmen, bei dem als Ableiter eine dünne flexible Platte mit konvexen Erhebungen vorgesehen ist, wobei durch ein an der Außenfläche der Metallplatte angeordnetes Punktschweiß-Polpaar leitfähige Schweißverbindungen mit den Randabschnitten der Elektroden gebildet werden.

Aus der JP 60065452 A ist ein alkalischer Akkumulator zu entnehmen, bei dem eine Ableiterplatte durch Laserschweißen an vom Zentrum der Ableiterplatte ausgehenden Linien mit dem Rand der Elektroden verbunden wird.

Der Erfindung liegt die Aufgabe zugrunde, die elektrische Verbindung zwischen Elektrodenrand und Ableiterplatte weiter zu verbessern, um insbesondere eine hohe Strombelastung zu ermöglichen und eine möglichst gleichmäßige Belastung der gesamten Elektrode zu erreichen.

Diese Aufgabe wird erfindungsgemäß bei einem alkalischen Akkumulator der eingangs genannten Art durch die Merkmale des Anspruchs 1 gelöst. In den Unteransprüchen sind vorteilhafte Ausgestaltungen des erfindungsgemäßen Akkumulators angegeben.

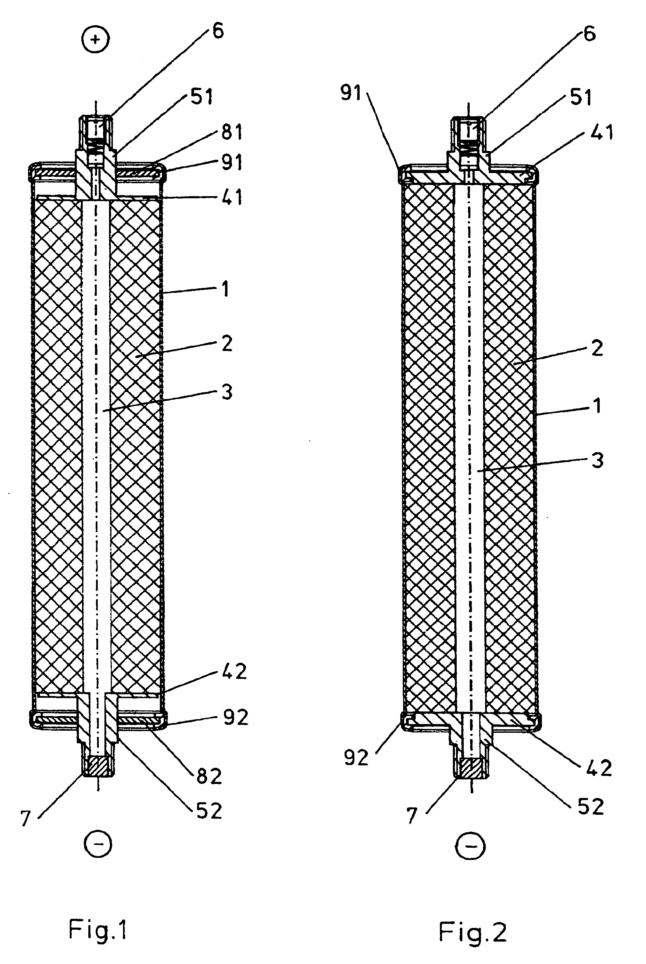

Im Folgenden ist der Gegenstand der Erfindung anhand der Figuren 1 bis 5, die verschiedene Ausführungsformen eines erfindungsgemäßen Akkumulators zeigen, näher erläutert.

Gemäß den Figuren ist in einem Gehäuse 1 ein Elektrodenwickel 2 angeordnet, der in an sich bekannter Weise einen inneren Hohlraum 3 besitzt. Bei diesem Wickel sind, wie allgemein üblich, die Elektroden derart gegeneinander verschoben, dass an einer Seite der Rand der positiven Elektrode aus dem Wickel herausragt und an der gegenüberliegenden Seite der Rand der negativen Elektrode. Die positive Elektrode ist eine Elektrode mit Nickelhydroxid als aktivem Material, Beispielsweise besteht sie aus einem Nickelschaum, in den das aktive Material einpastiert ist. Die negative Elektrode besitzt als aktives Material ein Wasserstoff-Speichermaterial, welches beispielsweise auf eine Ableiterfolie aufpastiert ist oder in ein Streckmetallnetz eingewalzt ist.

Zur Verbindung der Elektroden mit den äußeren Polabschlüssen dient jeweils eine Ableiterplatte 41, 42. Gemäß Figur 1 ist die Ableiterplatte 41,42 mit einem Rohrstutzen 51,52 versehen, wobei der Rohrstutzen 51 an einer Seite der Zeile ein Ventil 6 aufweist, während der Rohrstutzen 52 an der anderen Seite der Zelle durch einen Verschlusspfropfen 7 verschlossen ist. An dem Rohrstutzen 51,52, ist jeweils eine Verschlussplatte 81,82 durch Laserverschweiüung angebracht Über den Rand dieser Verschlussplatte 81,82 wird der Rand des Zeilengehäuses 1 unter Zwischenlage einer Dichtung 91,92 gas- und flüssigkeitsdicht umgebördelt.

Im Einzelnen läuft der Zusammenbau eines erfindungsgemäßen Akkumulators so ab, dass zuerst eine Ableiterplatte 42 auf den Rand der negativen Elektrode aufgeschweißt wird. Bei diesem Laserschweißen wird eine Vielzahl von Verschweißungspunkten auf der Fläche der Ableiterplatte hergestellt insbesondere can 350 bis 800 Punkte pro cm². Dadurch ergeben sich nahe nebeneinanderliegende Verschweißungspunkte längs des gesamten Randes der negativen Elektrode und insgesamt eine sehr hohe Zahl von Kontaktpunkten, so dass diese Ableiteranordnung mit sehr hohen Strömen belastet werden kann. Anschließend wird die Dichtung 92 auf die negative Verschlussplatte 82 aufgebracht und die Verschlussplatte 82 wird mit dem Rohrstutzen 52 laserverschweißt Dann wird die positive Ableiterplatte 41 mit Rohrstutzen 51 und Ventil 6 angeschweißt und der Wickel in das Zellengehäuse 1 eingeschoben. Der untere Rand des Zellengehäuses 1 wird dann um die negative Verschlussplatte 82, unter Zwischenlage der Dichtung 92, umgebördelt Es wird dann eine Dichtung 91 auf die positive Verschlussplatte 81 aufgezogen. Die positive Verschlussplatte 81 wird bis zur Schließzone auf den Rohrstutzen 51 aufgeschoben, mittels Laserschweißung mit dem Rohrstutzen 51 verschweißt und schließlich wird der obere Rand des Zellengehäuses 1 über die positive Verschlussplatte 81 unter Zwischenlage der Dichtung 91 umgebördelt. Der Elektrolyt wird durch den Polbolzen an der negativen Seite eindosiert, anschließend wird dieser Rohrstutzen 52 durch einen Pfropfen 7 gas- und flüssigkeitsdicht verschlossen.

Bei der Ausführungsform eines erfindungsgemäßen Akkumulators gemäß Figur 2 dient die Ableiterplatte 41,42, die auf jeder Seite des Elektrodenwickels mit dem Rand der Elektroden an vielen Punkten verschweißt ist, gleichzeitig als Verschlussplatte, Ober die der Rand des Zellenbechers 1 umgebördelt wird.

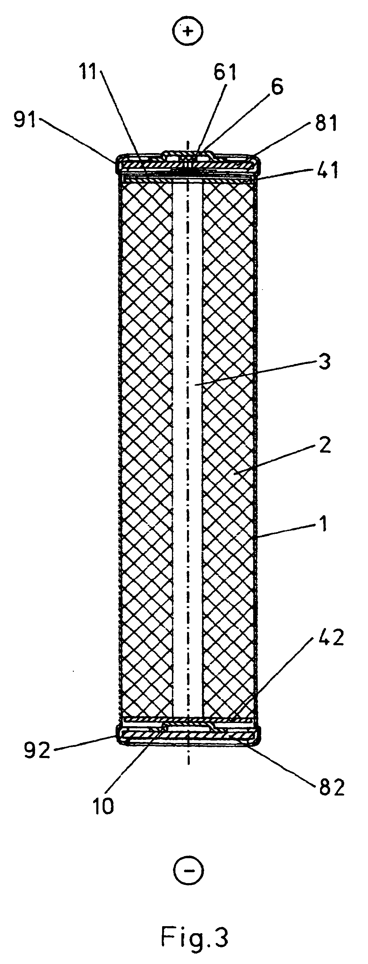

Gemäß Figur 3 ist auf der negativen Seite des Elektrodenwickels eine Ableiterplatte 42, wie zuvor beschrieben, angebracht. An diese Ableiterplatte 42 ist durch Laserschweißen ein Distanzstück 10 angeschweißt, welches wiederum mit einer Verschlussplatte 82 durch Schweißen verbunden ist. Über diese Verschlussplatte 82 wird der untere Rand des Zellengefäßes unter Zwischenlage der Dichtung 92 umgebördelt. Auf der positiven Seite des Elektrodenwickels ist wiederum eine Ableiterplatte 41 mit dem Elektrodenrand verbunden, die in der Mitte eine Öffnung aufweist. Zwischen der darüberliegenden Verschlussplatte 81 und der Ableiterplatte 41 ist eine flache Spiralfeder 11 angeordnet, deren äußere Windung mit der Ableiterplatte 41 verschweißt ist und deren innerste Windung mit der positiven Verschlussplatte 81 verschweißt ist. Die Verschlussplatte 81 selbst besitzt eine Öffnung oberhalb der ein Ventil 6 mit einem Ventildom 61 angeordnet ist. Wenn die Zelle an der negativen Seite verschlossen ist, kann bei dieser Ausführungsform die positive Verschlussplatte 81, die über die Spiralfeder 11 mit der Ableiterplatte 41 elektrisch verbunden ist, hochgezogen werden, und es ist möglich, durch die Spiralen der Feder 11 hindurch Elektrolyt in den inneren Hohlraum 3 der Zelle einzudosieren. Danach wird die Zelle wie vorher durch Umbördeln des Zellengehäuses 1 über die positive Verschlussplatte 81 unter Zwischenlage der Dichtung 91 gas- und flüssigkeitsdicht verschlossen.

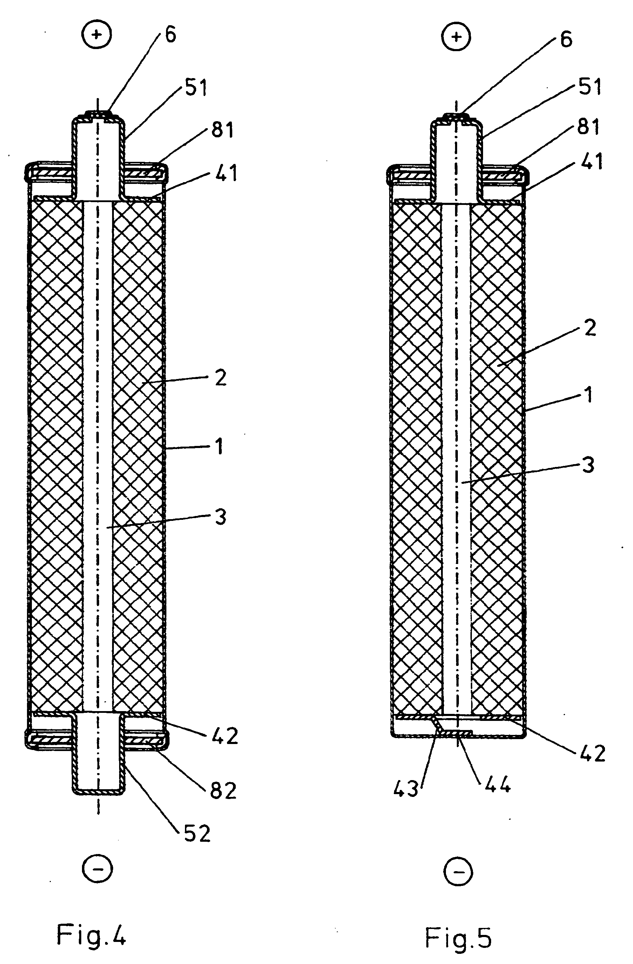

Gemäß Figur 4 ist Ableiterplatte 41,42 zusammen mit dem Rohrstutzen 51,52 ein insbesondere durch Tiefziehen hergestelltes und damit besonders kostengünstiges Umformteil. Auf der positiven Zellseite ist der Rohrstutzen 51 durch ein Ventil 6 abgeschlossen, auf der negativen Seite ist der Rohstutzen 52 verschlossen und das Umformteil hutförmig ausgestaltet. Im übrigen erfolgt der Zusammenbau wie vorher beschrieben.

Gemäß Figur 5 ist der Zellenbehälter 1 als einseitig offener Becher ausgeführt, Der untere negative Teil des Wickels ist erfindungsgemäß mit der Ableiterscheibe 42 versehen, die eine abgebogene Zunge 43 besitzt, welche durch insbesondere Ultraschallschweißung mit dem Zellenboden im Bereich 44 elektrisch verbunden ist.

Anstelle der Ableiterscheibe 42 mit abgebogener Zunge 43 kann auch eine Ableiterscheibe verwendet werden, die in ihrer Mitte eine napfförmige Ausbuchtung besitzt, und der am Boden des Zellenbechers 1 anliegende Teil der napfförmigen Ausbuchtung kann mit dem Zellenboden durch Laserschweißen verschweißt werden.

Die erfindungsgemäße Ausgestaltung der positiven und negativen Ableiterplatten und deren Verschweißung mit den Elektrodenrändern ermöglicht es, Zellen herzustellen, die mit hohen Strömen belastbar sind und die beispielsweise im Elektrostraßenfahrzeug Verwendung finden können.

## Patentansprüche

1. Alkalischer Akkumulator mit in einem Gehäuse angeordnetem Wickelelektrodensatz, bei dem die Elektrodenränder durch Laserschweißen mit Ableiterplatten (41, 42) verbunden sind, **dadurch gekennzeichnet, dass** auf der Fläche der Ableiterplatte, an der der jeweilige Elektrodenrand anliegt, eine Vielzahl von längs des gesamten Elektrodenrandes gleichmäßig nebeneinander liegenden Laserverschweißungspunkten angeordnet ist.

2. Alkalischer Akkumulator nach Anspruch 1, **dadurch gekennzeichnet, dass** die Ableiterplatte (41) an einer Seite des Elektrodenwickels mit einem Rohrstutzen (51) versehen ist, der ein Ventil (6) enthält.

3. Elektrischer Akkumulator nach Anspruch 1 oder 2, **dadurch gekennzeichnet dass** der Rohrstutzen (52) einer Ableiterplatte (42) durch einen Verschlusspfropfen (7) verschlossen ist.

4. Alkalischer Akkumulator nach den Ansprüchen 2 oder 3, **dadurch gekennzeichnet, dass** an die Rohrstutzen (41, 42) Verschlussplatten (81,82) angeschweißt sind, über die der Gehäuserand unter Zwischenlage einer Dichtung (91, 92) umgebördelt ist.

5. Alkalischer Akkumulator nach Anspruch 2 oder 3, **dadurch gekennzeichnet, dass** die Ableiterplatte (41, 42) gleichzeitig die Verschlussplatte der Zelle bildet, über die der Gehäuserand unter Zwischenlage einer Dichtung (91, 92) umgebördelt ist.

6. Alkalischer Akkumulator nach Anspruch 1, **dadurch gekennzeichnet, dass** eine Ableiterplatte (42) mit einer Distanzplatte (10) verschweißt ist, die wiederum mit einer Verschlussplatte (82) verschweißt ist, über deren Rand der Gehäuserand unter Zwischenlage einer Dichtung (92) umgebördelt ist

7. Alkalischer Akkumulator nach Anspruch 1, **dadurch gekennzeichnet, dass** zwischen einer Ableiterplatte (41) und der zugehörigen Verschlussplatte (81) eine flache Spiralfeder (11) angeordnet ist, deren äußere Windung mit der Ableiterplatte (41) verschweißt ist und deren innerster Windung mit der Verschlussplatte (82) verschweißt ist.

8. Alkalischer Akkumulator nach einem oder mehreren der Ansprüche 1 bis 7, **dadurch gekennzeichnet, dass** die Zahl der Laserverschweißungspunkte zwischen 350 bis 800 Punkte pro cm² beträgt.

## Claims

1. Alkaline rechargeable battery having a wound electrode set which is arranged in a housing and in which the electrode edges are connected to discharge plates (41, 42) by laser welding, **characterized in that** a multiplicity of laser spotwelds, which are located uniformly alongside one another along the entire electrode edge, are arranged on that surface of the discharge plate on which the respective electrode edge rests.

2. Alkaline rechargeable battery according to Claim 1, **characterized in that** the discharge plate (41) is provided on one side of the electrode winding with a tubular connecting stub (51) which contains a valve (6).

3. Electrical rechargeable battery according to Claim 1 or 2, **characterized in that** the tubular connecting stub (52) of a discharge plate (42) is closed by a closure plug (7).

4. Alkaline rechargeable battery according to Claim 2 or 3, **characterized in that** closure plates (81, 82) are welded to the tubular connecting stubs (41, 42) and surround the housing edge, with the interposition of a seal (91, 92).

5. Alkaline rechargeable battery according to Claim 2 or 3, **characterized in that** the discharge plate (41, 42) at the same time forms the closure plate of the cell which surrounds the housing edge with the interposition of a seal (91, 92).

6. Alkaline rechargeable battery according to Claim 1, **characterized in that** a discharge plate (42) is welded to a spacing plate (10), which is in turn welded to a closure plate (82) whose edge surrounds the housing edge, with the interposition of a seal (92).

7. Alkaline rechargeable battery according to Claim 1, **characterized in that** a flat spiral spring (11) is arranged between a discharge plate (41) and the associated closure plate (B1), its outer turn is welded to the discharge plate (41), and its innermost turn is welded to the closure plate (82).

8. Alkaline rechargeable battery according to one or more of Claims 1 to 7, **characterized in that** the number of laser spotwelds is between 350 and 800 spots per cm².

## Revendications

1. Accumulateur alcalin comportant un jeu d'électrodes enroulées, installé dans un boîtier, les bords des électrodes étant reliés par soudage au laser à des plaques de dissipation (41, 42),
**caractérisé en ce que**
la surface de la plaque de dissipation contre laquelle s'appuie le bord respectif d'une électrode comporte un grand nombre de points de soudage par laser, régulièrement juxtaposés, s'étendant le long de l'ensemble du bord de l'électrode.

2. Accumulateur alcalin selon la revendication 1,
**caractérisé en ce que**
la plaque de dissipation (41) est munie sur un côté de l'électrode enroulée, d'un manchon tubulaire (51) comportant une soupape (6).

3. Sac à soufflets selon l'une quelconque des revendications 1 ou 2,
**caractérisé en ce que**
l'embout tubulaire (52) d'une plaque de dissipation (42) est fermé par un bouchon (7).

4. Sac à soufflets selon l'une quelconque des revendications 2 ou 3,
**caractérisé en ce que**
des plaques d'obturation (81, 82) sont soudées sur les embouts tubulaires (41, 42) en étant rabattues sur le bord du boîtier avec interposition d'un joint (91, 92).

5. Sac à soufflets selon l'une quelconque des revendications 2 ou 3,
**caractérisé en ce que**
la plaque de dissipation (41, 42) forme en même temps la plaque d'obturation de la cellule au tour de laquelle le bord du boîtier est serti avec interposition d'un joint (91, 92).

6. Sac à soufflets selon la revendication 1,
**caractérisé par**
une plaque de dissipation (42) soudée à une plaque d'écartement (10) elle-même soudée à une plaque de fermeture (82) et le bord du boîtier est serti autour de cette plaque de fermeture avec interposition d'un joint (92).

7. Sac à soufflets selon la revendication 1,
**caractérisé par**
un ressort spiral plat (11) installé entre la plaque de dissipation (41) et la plaque de fermeture (B1) correspondante, la spire extérieure du ressort étant soudée à la plaque de dissipation (41) et sa spire inférieure étant soudée à la plaque de fermeture (82).

8. Sac à soufflets selon l'une quelconque des revendications 1 à 7,
**caractérisé en ce que**
le nombre de points de soudage par laser est compris entre 350 et 800 points par cm².
